# EUROPÄISCHE PATENTSCHRIFT

(11) **EP 1 355 096 B1**
(45) Veröffentlichungstag und Bekanntmachung des Hinweises auf die Patenterteilung: **13.07.2005**
(21) Anmeldenummer: 03008142.6
(22) Anmeldetag: 08.04.2003
(51) Int. Cl.: F16K 31/06

(54) **Proportionalmagnetventil**
Proportional magnetic valve
Soupape proportionnelle magnétique

(30) Priorität: 20.04.2002 DE 10217625
(43) Veröffentlichungstag der Anmeldung: 22.10.2003
(73) Patentinhaber: Hydraulik-Ring GmbH, 72622 Nürtingen (DE)
(72) Erfinder: Trzmiel, Alfred, 72661 Grafenberg (DE); Neuhaus, Rolf Dr., 97816 Lohr (DE); Zapf, Friedrich, 97753 Karlstadt (DE)
(74) Vertreter: Jackisch-Kohl, Anna-Katharina

(56) Entgegenhaltungen:
- FR-A- 2 206 795
- US-A- 5 381 965
- US-A- 5 931 179
- US-A1- 2002 038 670

## Beschreibung

Die Erfindung betrifft ein Proportional-Magnetventil, vorzugsweise ein Proportional-Drosselventil, insbesondere für Diesel-Hochdruckpumpen in Kraftfahrzeugen, nach dem Oberbegriff des Anspruches 1.

Der Kolben eines Proportional-Magnetventils muß genau eingestellt werden, damit eine befriedigende Drosselfunktion erreicht wird. Diese Einstellung ist aufwendig und schwierig.

Bei einem bekannten Einspritzdüsenventil (FR 2 206 795) sitzt auf einer Nadel ein Anker, der durch eine Druckfeder belastet ist. Mit der Nadel wird eine Einspritzöffnung des Einspritzventiles geschlossen. Soll Kraftstoff eingespritzt werden, wird durch Bestromung des Elektromagneten der Anker angezogen, wodurch die Nadel von der Einspritzöffnung abhebt, so daß der Kraftstoff in die Verbrennungskammer eingespritzt werden kann.

Es ist ein Hydraulikventil bekannt (US 5 931 179), bei dem ein Anker eines Elektromagneten auf einem Stößel sitzt, der sich durch eine Axialbohrung eines Ventilkörpers erstreckt.

Es ist schließlich ein Magnetventil bekannt (US 2002/0038670), bei dem ein Magnetanker auf einem Stößel sitzt, der an einem Kolben anliegt. Er wird durch eine Druckfeder in Anlage an dem den Anker tragenden Stößel gehalten. Durch Betätigung des Elektromagneten wird der Anker verschoben, wodurch über den Stößel der Kolben gegen die Kraft der Druckfeder verschoben wird.

Der Erfindung liegt die Aufgabe zugrunde, das gattungsgemäße Proportional-Magnetventil so auszubilden, daß der Kolben relativ zur Buchse in einfacher Weise genau positioniert werden kann.

Diese Aufgabe wird beim gattungsgemäßen Proportionalmagnetventil erfindungsgemäß mit den kennzeichnenden Merkmalen des Anspruches 1 gelöst.

Beim erfindungsgemäßen Proportional-Magnetventil wird die Buchse gegen das verformbare Bauteil verschoben, wodurch die Buchse in eine genaue Einbaulage eingestellt werden kann. Bei diesem Einstellvorgang wird das Bauteil in Achsrichtung der Buchse bzw. des darin gelagerten Kolbens axial verformt. Auf diese Weise läßt sich die Buchse sehr einfach und dennoch genau in die erforderliche Einbaulage bringen. Der Polkern kann zur Magnetkrafteinstellung im Gehäuse verschoben werden. Da der Kolben durch den Polkern ragt, hat das erfindungsgemäße Magnetventil eine kleine Einbaulänge.

Bei einer Ausbildung entsprechend Anspruch 6 läßt sich der Kolben sehr einfach genau in die exakte Einbaulage bringen, indem er im erforderlichen Maße in den Anker eingepreßt wird. Dadurch ist eine hochgenaue Positionierung des Kolbens gewährleistet.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles-näher erläutert. Es zeigen
- Fig. 1: im Axialschnitt ein erfindungsgemäßes Drosselventil,
- Fig. 2: in einem Schnitt eine Lagesicherung eines Kolbens des erfindungsgemäßen Drosselventils.

Das Drosselventil wird vorteilhaft für Diesel-Hochdruckpumpen in Kraftfahrzeugen eingesetzt und ist ein Proportional-Drosselventil. Es hat einen Proportionalmagneten 1 mit einem Gehäuse 2, in dem eine Spule 3 untergebracht ist. Sie umgibt einen Topf 4, der haubenförmig ausgebildet ist und in den ein Anker 5 ragt. Er sitzt mit Preßsitz auf dem einen Ende eines Kolbens 6. Der Anker 5 ist napfförmig ausgebildet und ragt mit radialem Spiel in den Topf 4. In den Topf 4 ist eine napfförmige Abschirmung 7 eingesetzt, die mit ihrem Boden 8 auf dem Boden 9 des Topfes 4 aufliegt. Der Boden 8 der Abschirmung 7 ist zentrisch mit einer Erhöhung 10 versehen, die durch eine plastische Verformung des Bodens 8 gebildet ist und auf der der Anker 5 aufliegt. Das freie Ende der Abschirmung 7 übergreift einen zylindrischen Ansatz 11 eines Gehäuseteiles 12, mit dem der Proportionalmagnet 1 in einen Aufnahmeraum 13 eines Hydraulikbauteiles 14 eingepreßt ist.

Der Kolben 6 ragt durch einen Polkern 15, der in den Gehäuseteil 12 eingesetzt ist. An seinem dem Anker 5 zugewandten Ende ist die Innenwand 16 des Polkerns 15 erweitert ausgebildet. An einer dadurch gebildeten radialen Schulterfläche 17 stützt sich das eine Ende einer Schraubendruckfeder 18 ab, deren anderes Ende an der Stirnseite des Ankers 5 anliegt. Durch die Schraubendruckfeder 18 wird der Anker 5 und damit auch der Kolben 6 gegen die Erhöhung 10 des Bodens 8 der Abschirmung 7 gedrückt, wenn der Proportionalmagnet 1 nicht eingeschaltet ist.

Die Innenwand 19 des Aufnahmeraumes 13 ist mit Abstand vom Gehäuseteil 12 im Durchmesser verringert. In diesem Bereich liegt eine Buchse 20 mit ihrer äußeren Mantelfläche an, in welcher der Kolben 6 geführt ist. Die Buchse 20 hat in ihrer äußeren Mantelfläche zwei mit axialem Abstand voneinander liegende Ringnuten 21, 22, in die jeweils Radialbohrungen 23, 24 münden, die jeweils gleichmäßig verteilt über den Umfang der Buchse 20 vorgesehen sind und diese durchsetzen. Das Hydraulikbauteil 14 hat zwei Bohrungen 25, 26 für den Durchfluß von Hydraulikmedium. Sie können mit dem Kolben 6 in noch zu beschreibender Weise geöffnet bzw. verschlossen werden.

Die Innenwand 19 des Aufnahmeraumes 13 geht an ihrem vom Proportionaimagnet 1 abgewandten Ende über eine radial nach innen gerichtete Schulterfläche 27 in eine im Durchmesser gegenüber dem Aufnahmeraum 13 verringerte zentrische Bohrung 28 über, in die das freie Ende des Kolbens 6 mit radialem Spiel ragt. Die Hydraulikbuchse 20 liegt unter Zwischenlage einer Ringdichtung 29 an der Schulterfläche 27 an. Die Hydraulikbuchse 20 ist an ihrem freien Ende mit einer stirnseitig offenen Ringnut 30 versehen, in der die Ringdichtung 29 liegt.

Die Hydraulikbuchse ist im Bereich zwischen den Ringnuten 21, 22 mit einer Ringnut 31 versehen, die eine weitere Ringdichtung 32 aufnimmt, die dichtend an der Innenwand 19 des Aufnahmeraumes 13 anliegt.

Der Aufnahmeraum 13 ist an seinem dem Proportionalmagnet 1 zugewandten Ende kegelförmig erweitert. Dadurch wird ein Aufnahmeraum für eine Ringdichtung 33 gebildet, mit welcher das Gehäuse 2 des Proportionalmagneten 1 gegenüber dem Hydraulikbauteil 14 stirnseitig abgedichtet wird.

Die Hydraulikbuchse 20 hat axialen Abstand von der Stirnseite des Gehäuseteiles 12. Zwischen der Stirnseite der Hydraulikbuchse 20 und der Stirnseite des Gehäuseteiles 12 befindet sich wenigstens ein elastisch oder plastisch in Axialrichtung verformbares Bauteil 34, vorzugsweise ein Quetschring. Mit diesem verformbaren Bauteil 34 läßt sich die Hydraulikbuchse 20 in einfacher Weise in ihre erforderliche Einbaulage einstellen. Durch Verschieben der Buchse 20 gegen das Bauteil 34 ist eine genaue Einstellung der Einbaulage der Buchse 20 gewährleistet. Alternativ oder zusätzlich kann der Kolben 6 unterschiedlich weit in den Anker 5 eingepreßt werden, so daß der Kolben 6 in seine exakte Einbaulage eingestellt werden kann. Die Magnetkrafteinstellung erfolgt durch Verschieben des Polkerns 15 im Gehäuse 2. Der Magnetanker 5 wird über den Kolben 6 lediglich in der Buchse 20 radial zentriert.

Der Kolben 6 ist mit einer Ringnut 35 versehen.

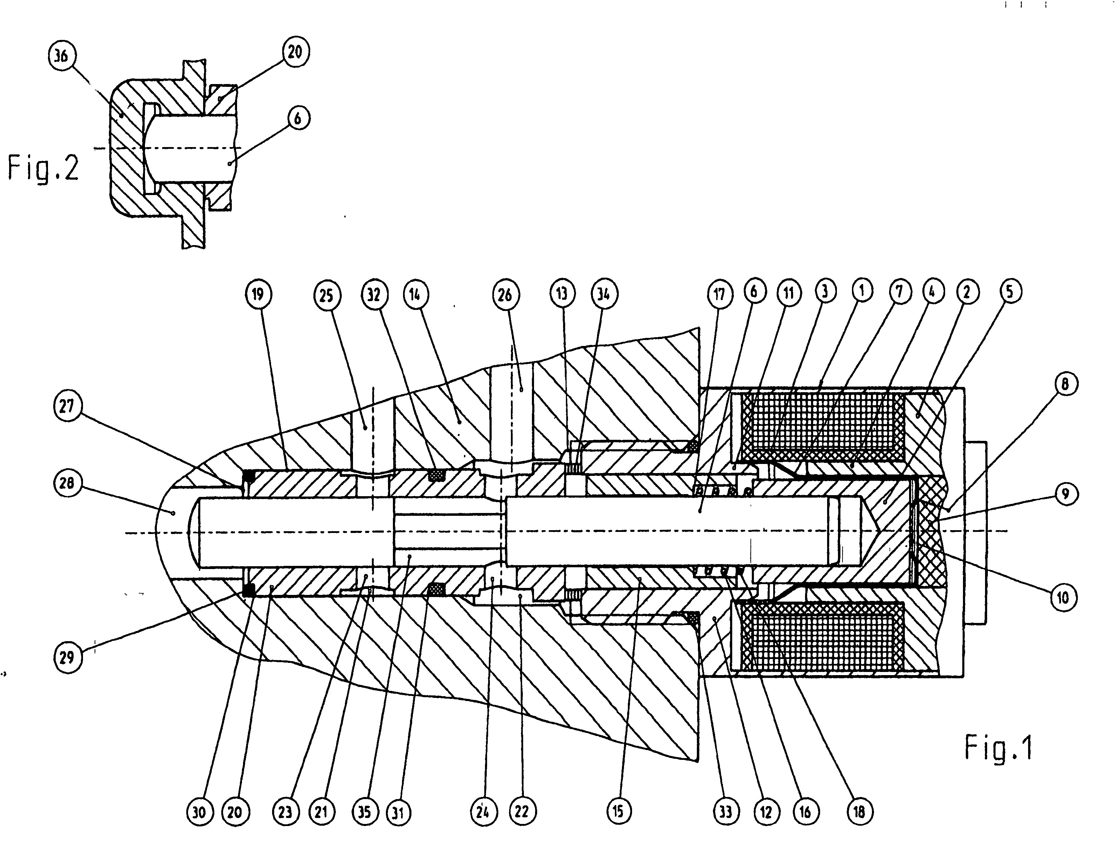

Die Buchse 20 wird so in den Aufnahmeraum 13 des Hydraulikteiles 14 eingesetzt, daß die Bohrungen 25, 26 in die Ringnuten 21, 22 münden. Der Kolben 6 wird so weit in den Anker 5 gepreßt, daß er die Ringnut 21 bzw. die in diese mündenden Radialbohrungen 23 verschließt, wenn der Anker 5 unter der Kraft der Druckfeder 18 an der Erhöhung 10 des Bodens 8 der Abschirmung 7 anliegt (Fig. 1). Die Ringnut 35 im Kolben 6 ist so lang, daß in dieser Stellung die Bohrung 26 des Hydraulikbauteiles 14 über die Radialbohrungen 24 mit der Ringnut 35 in Verbindung steht.

Wird der Proportionalmagnet 1 erregt, wird je nach Stromstärke der Anker 5 gegen die Kraft der Druckfeder 18 verschoben. Hierbei nimmt er den Kolben 6 mit. Bereits nach kurzem Verschiebeweg werden die Radialbohrungen 23 durch den Kolben 6 freigegeben, so daß das Hydraulikmedium von der Bohrung 25 über die Ringnut 35 in die Bohrung 26 strömen kann. Je nach Verschiebeweg des Kolbens 6 kann der Öffnungsquerschnitt der Radialbohrungen 23 stufenlos eingestellt werden. Die Drosselwirkung läßt sich somit optimal einstellen. Bei entsprechender Bestromung des Proportionalmagneten 1 kann der Anker 5 und damit der Kolben 6 so weit verschoben werden, daß die Radialbohrungen 24 vollständig durch den Kolben geschlossen sind.

Der Kolben 6 kann beispielsweise aus einer Lagernadel kostengünstig gefertigt werden. Die Dichtungsringe 27, 32 auf der Buchse 20 gewährleisten in einfacher Weise einen radialen Spielausgleich im Aufnahmeraum 13 des Hydraulikbauteiles 14. Das Proportional-Drosselventil besteht aus nur wenigen Bauteilen, die infolge der beschriebenen Ausbildung und Anordnung sehr genau in die erforderliche Einbaulage gebracht werden können.

Auf das in die Bohrung 28 ragende Ende des Kolbens 6 kann ein Sicherungsteil 36 (Fig. 2) gesteckt werden, das als Verliersicherung für die Buchse 20 beim Transport dient. Das Sicherungsteil 36 ist kappenförmig ausgebildet und besteht vorteilhaft aus Kunststoff. Es sitzt klemmend auf dem Kolbenende und kann vor dem Einbau in das Hydraulikbauteil 14 einfach abgenommen werden.

Das verformbare Bauteil 34 kann aus Kunststoff, aus Gummi oder einem anderen geeigneten verformbaren Material bestehen. Der Proportionalmagnet 1 läßt sich mit dem Gehäuseteil 12 einfach in den Aufnahmeraum 13 schrauben, so daß eine einfache Anbindung des Proportionalmagneten 1 an die Hydraulikbuchse 20 gewährleistet ist.

## Patentansprüche

1. Proportionalmagnetventil, vorzugsweise Proportional-Drosselventil, insbesondere für Diesel-Hochdruckpumpen in Kraftfahrzeugen, mit einem Elektromagneten (1), der einen in einem Gehäuse (2) verschiebbaren Anker (5) aufweist, mit dem ein Kolben (6) in einer Buchse (20) stromabhängig verschiebbar ist, mit einem Polkern (15) und mit wenigstens einem in Achsrichtung des Kolbens (6) verformbaren Bauteil (34), das zwischen der Buchse (20) und dem Gehäuse (2) liegt,
**dadurch gekennzeichnet, daß** der Polkern (15) zur Magnetkrafteinstellung im Gehäuse (2) verschiebbar ist, und daß der Kolben (6) durch den Polkern (15) ragt.

2. Proportionalmagnetventil nach Anspruch 1,
**dadurch gekennzeichnet, daß** das Bauteil (34) elastisch verformbar ist.

3. Proportionalmagnetventil nach Anspruch 1,
**dadurch gekennzeichnet, daß** das Bauteil (34) plastisch verformbar ist.

4. Proportionalmagnetventil nach einem der Ansprüche 1 bis 3,
**dadurch gekennzeichnet, daß** das Bauteil (34) ein Quetschring ist.

5. Proportionalmagnetventil nach einem der Ansprüche 1 bis 4,
**dadurch gekennzeichnet, daß** das Bauteil (34) an den Stirnseiten der Buchse (20) und des Gehäuses (2) anliegt.

6. Proportionalmagnetventil, nach einem der Ansprüche 1 bis 5,
**dadurch gekennzeichnet, daß** der Kolben (6) in den Anker (5) axial unterschiedlich weit einpreßbar ist.

7. Proportionalmagnetventil nach einem der Ansprüche 1 bis 6,
**dadurch gekennzeichnet, daß** der Anker (5) über den Kolben (6) in der Buchse (20) gelagert ist.

8. Proportionalmagnetventil nach einem der Ansprüche 1 bis 7,
**dadurch gekennzeichnet, daß** der Anker (5) mit radialem Spiel in einen Topf (4) ragt.

9. Proportionalmagnetventil nach einem der Ansprüche 1 bis 8,
**dadurch gekennzeichnet, daß** der Anker (5) bei bestromten Elektromagneten (1) gegen eine Gegenkraft, vorzugsweise eine Federkraft, verschiebbar ist.

10. Proportionalmagnetventil nach einem der Ansprüche 1 bis 9,
**dadurch gekennzeichnet, daß** der Kolben (6) aus einer Lagernadel hergestellt ist.

11. Proportionalmagnetventil nach einem der Ansprüche 1 bis 10,
**dadurch gekennzeichnet, daß** auf der Buchse (20) wenigstens ein Dichtring (27, 32) zum Spielausgleich in einem Aufnahmeraum (13) eines Hydraulikbauteiles (14) sitzt.

12. Proportionalmagnetventil nach einem der Ansprüche 1 bis 11,
**dadurch gekennzeichnet, daß** das Gehäuse (2) in den Aufnahmeraum (13) des Hydraulikbauteiles (14) schraubbar ist.

13. Proportionalmagnetventil nach einem der Ansprüche 1 bis 12,
**dadurch gekennzeichnet, daß** zur Transportsicherung auf das freie Ende des Kolbens (6) ein Sicherungsteil (36) steckbar ist.

14. Proportionalmagnetventil nach Anspruch 13,
**dadurch gekennzeichnet, daß** das Sicherungsteil (36) kappenförmig ausgebildet ist.

15. Proportionalmagnetventil nach Anspruch 13 oder 14,
**dadurch gekennzeichnet, daß** das Sicherungsteil (36) aus Kunststoff besteht.

## Claims

1. A proportional magnetic valve, preferably a proportional throttle valve, in particular for diesel high-pressure pumps within motor vehicles, with a solenoid (1), comprising an armature (5) within a housing (2), a piston (6) within a jack (20) displacable by the armature (5) dependent upon current, with a pole core (15) and with at least one component (34), deformable in direction of the axis of the piston (6), the component (34) being situated between the jack (20) and the housing (2), **characterised in that** the pole core (15) is displacable within the housing (2) for adjustment of magnetic force and that the piston (6) projects through the pole core (15).

2. A proportional magnetic valve according to claim 1,
**characterised in that** the component (34) is elastically deformable.

3. A proportional magnetic valve according to claim 1,
**characterised in that** the component (34) is plastically deformable.

4. A proportional magnetic valve according to one of the claims 1 to 3,
**characterised in that** the component (34) is a crimp ring.

5. A proportional magnetic valve according to one of the claims 1 to 4,
**characterised in that** the component (34) abuts to the front sides of the jack (20) and the housing (2).

6. A proportional magnetic valve according to one of the claims 1 to 5,
**characterised in that** the piston (6) can be press-fitted variably long into the armature (5).

7. A proportional magnetic valve according to one of the claims 1 to 6,
**characterised in that** the armature (5) is mounted via the piston (6) within the jack (20).

8. A proportional magnetic valve according to one of the claims 1 to 7,
**characterised in that** the armature (5) projects with radial clearance within a pot (4).

9. A proportional magnetic valve according to one of the claims 1 to 8,
**characterised in that** the armature (5) is displacable during solenoid (1) under current against a countercheck, preferably a spring force.

10. A proportional magnetic valve according to one of the claims 1 to 9,
**characterised in that** the piston (6) is produced out of a bearing needle.

11. A proportional magnetic valve according to one of the claims 1 to 10,
**characterised in that** on the jack (20) is located at least one sealing ring (27, 32) for clearance compensation within a reception space (13) of a hydraulic component (14).

12. A proportional magnetic valve according to one of the claims 1 to 11,
**characterised in that** the housing (2) can be screwed into the reception space (13) of the hydraulic component (14).

13. A proportional magnetic valve according to one of the claims 1 to 12,
**characterised in that** onto the free end of the piston (6) a locking element (36) is pluggable for transportation lock.

14. A proportional magnetic valve according to claim 13,
**characterised in that** the locking element (36) is cap-formed.

15. A proportional magnetic valve according to claim 13 or 14,
**characterised in that** the locking element (36) consists of plastic.

## Revendications

1. Soupape magnétique proportionnelle, de préférence soupape d'étranglement proportionnelle, en particulier pour pompes diesel à haute pression dans des véhicules automobiles, comportant un électroaimant (1) qui présente un induit (5) déplaçable dans un boîtier (2), par lequel un piston (6) peut être déplacé dans une douille (20) en fonction du courant, comportant un noyau polaire (15) et au moins un composant (34) déformable en direction axiale du piston (6), lequel se trouve entre la douille (20) et le boîtier (2), **caractérisée en ce que** le noyau polaire (15) peut être déplacé dans le boîtier (2) pour régler la force magnétique, et **en ce que** le piston (6) fait saillie à travers le noyau polaire (15).

2. Soupape magnétique proportionnelle selon la revendication 1, **caractérisée en ce que** le composant (34) est déformable élastiquement.

3. Soupape magnétique proportionnelle selon la revendication 1, **caractérisée en ce que** le composant (34) est déformable plastiquement.

4. Soupape magnétique proportionnelle selon l'une des revendications 1 à 3, **caractérisée en ce que** le composant (34) est une bague à écraser.

5. Soupape magnétique proportionnelle selon l'une des revendications 1 à 4, **caractérisée en ce que** le composant (34) est en appui sur les faces frontales de la douille (20) et du boîtier (2).

6. Soupape magnétique proportionnelle selon l'une des revendications 1 à 5, **caractérisée en ce que** le piston (6) peut être enfoncé à la presse axialement dans l'induit (5) à différentes profondeurs.

7. Soupape magnétique proportionnelle selon l'une des revendications 1 à 6, **caractérisée en ce que** l'induit (5) est monté dans la douille (20) via le piston (6).

8. Soupape magnétique proportionnelle selon l'une des revendications 1 à 7, **caractérisée en ce que** l'induit (5) fait saillie dans un pot (4) avec un jeu radial.

9. Soupape magnétique proportionnelle selon l'une des revendications 1 à 8, **caractérisée en ce que** lorsque l'électroaimant (1) est traversé par un courant, l'induit (5) peut être déplacé à l'encontre d'une force antagoniste, de préférence d'une force à effet de ressort.

10. Soupape magnétique proportionnelle selon l'une des revendications 1 à 9, **caractérisée en ce que** le piston (6) est réalisé à partir d'une aiguille de palier.

11. Soupape magnétique proportionnelle selon l'une des revendications 1 à 10, **caractérisée en ce que** sur la douille (20) est logée au moins une bague d'étanchéité (27, 32) pour compenser le jeu dans une chambre de réception (13) d'un composant hydraulique (14).

12. Soupape magnétique proportionnelle selon l'une des revendications 1 à 11, **caractérisée en ce que** le boîtier (2) peut être vissé dans la chambre de réception (13) du composant hydraulique (14).

13. Soupape magnétique proportionnelle selon l'une des revendications 1 à 12, **caractérisée en ce que** pour assurer le transport, une pièce de sécurité (36) peut être enfilée sur l'extrémité libre (6).

14. Soupape magnétique proportionnelle selon la revendication 13, **caractérisée en ce que** la pièce de sécurité (36) est réalisée en forme de capuchon.

15. Soupape magnétique proportionnelle selon l'une ou l'autre des revendications 13 et 14, **caractérisée en ce que** la pièce de sécurité (36) est en matière plastique.
